# EUROPEAN PATENT APPLICATION

(11) **EP 1 852 495 A1**
(43) Date of publication of application: **07.11.2007**
(21) Application number: 07251846.7
(22) Date of filing: 02.05.2007
(51) Int. Cl.: C10L 5/44

(54) **Method of manufacturing a combustible material**

(30) Priority: 02.05.2006 ZA 200603447
(71) Applicant: Vasillos, Prokopos, Xilocastro, Corinthias 20400 (GR)
(72) Inventor: Vasillos, Prokopos, Xilocastro, Corinthias 20400 (GR)
(74) Representative: Wytenburg, Wilhelmus Johannes

(57) **Abstract**

The invention relates to a method of manufacturing a combustible material comprising the steps of grinding the olive waste and compacting the ground olive waste to form a brick which makes use of potentially environmentally hazardous olive waste.

## Description

This invention relates to a method of manufacturing a combustible material and extends to a combustible material produced by said method.

The processes for extracting oil from olive drupes to make edible olive oil are well known and include, for example, pressing, percolation or centrifugation. Regardless of the method used, the waste material resulting from the oil extraction is substantial and, in many olive oil producing countries, poses an environmental hazard.

In this specification, the term "olive waste" shall be understood to mean the solid pomace resulting from a process of extracting oil from olives.

Preferably, an object of this invention is to provide a method of manufacturing a combustible material which at least partially uses olive waste. Preferably, it is a further object of this invention to provide a combustible material using said method.

In accordance with a first aspect of this invention there is provided a method of manufacturing a combustible material comprising the steps of
grinding olive waste and
compacting the ground olive waste to form a brick.

The invention may further provide the step of adding a binding material before or after grinding the olive waste and the binding material may be maize flour.

The method may further include the step of allowing the brick to dry, forming an hole through the brick, preferably more than one hole, and then dividing the brick into briquettes having a hole extending therethrough, each briquette being sized to be hand held. The method may include cutting each briquette into a frusto-pyramidal shape.

The method may further include the step of adding to the olive waste, before or after grinding, an additional organic material such as dry wood. Further, there is provided the step of adding an aromatic material to the olive waste or to the bricks formed. The aromatic material may release a scent of smoked beef.

In accordance with a second aspect of this invention there is provided a combustible material manufactured from the method described.

Further in accordance with the invention there is provided for the material to preferably have at least one aperture extending therethrough and, preferably, the material is porous.

A preferred embodiment of the invention is now described below, by way of example only.

The process for producing olive oil will not be described in this specification as it is well known. The solid waste resulting from the process contains the skins, pulp and pit fragments of the olives, namely the pomace. The pomace itself contains oil which is flammable and which, when burnt, produces aromatic fumes.

The solid waste is then ground and mixed with wet maize flour to form a homogenous adhesive paste. An aromatic substance which releases a smoked beef scent when burnt is then mixed to the paste. The paste is allowed to dry to a desired hardness which is then compacted in a press to produce an elongate brick. This brick may, in itself, be used as fuel in a number of applications, such as in a furnace.

The brick is then bored through to form two holes extending through its length. It is then segmented into briquettes which are easily hand held, each having two holes. These briquettes may be rectangular but, preferably, each briquette has a base side which is larger than the top side. More preferably, each briquette has a frustopyramidal shape.

A plurality of briquettes are sold in a packaging as fuel for barbeques, typically for household use. Depending on the heat desired for barbequing purposes, one or more briquette may be burnt. The frustopyramidal shape of the briquette assists in the building of a briquette pile to be burnt. The fumes produced by the burning briquette are pleasant to smell and it is accordingly desirable to stand near the heat, which facilitates social interaction during a barbeque.

The invention is not confined to the specific embodiment described above, and it will be appreciated that many variations exist which fall within its scope. For example, a percentage of dry wood by weight may be added to the olive waste before it is ground. Alternatively, the wood may be ground separately and then mixed with the ground olive waste. The exact composition of the briquette will depend on the availability of organic material and on the need for recycling of any available or environmentally hazardous organic waste.

It will be readily appreciated that this invention may provide a method of manufacture of a combustible material which is cost effective and which allows for the recycling of potentially environmentally hazardous olive waste. It may also provide an effective combustible briquette suitable for home use.

## Claims

1. A method of manufacturing a combustible material comprising the steps of
a) grinding olive waste and
b) compacting the ground olive waste to form a brick.

2. A method as claimed in claim 1 further including the step of adding a binding material before or after step a).

3. A method as claimed in claim 2 in which the binding material is maize flour.

4. A method as claimed in any one of the preceding claims including the step of allowing the brick to dry, forming a hole through the brick, and then dividing the brick into briquettes each having a hole extending therethrough and each briquette being sized to be hand held.

5. A method as claimed in claim 4 in which more than one hole is formed through the brick.

6. A method as claimed in claim 4 or 5 including cutting each briquette into a frusto-pyramidal shape.

7. A method as claimed in any one of the preceding claims including the step of adding an additional organic material to the olive waste before or after step a).

8. A method as claimed in claim 7 in which the organic material is dry wood.

9. A method as claimed in claim 4 including the step of adding an aromatic material to the olive waste or to the bricks formed.

10. A method as claimed in claim 9 in which the aromatic material releases a scent of smoked beef.

11. A combustible material manufactured from the method as claimed in any one of the preceding claims.

12. A combustible material as claimed in claim 11 formed by a porous material.
